Europäisches Patentamt

European Patent Office

Office européen des brevets

(19)

(11) Publication number: **0 275 246**
**A2**

(12) # EUROPEAN PATENT APPLICATION

(21) Application number: **88850011.3**

(22) Date of filing: **14.01.88**

(51) Int. Cl.⁴: **C 01 B 11/02**

(30) Priority: **15.01.87 US 4086**

(43) Date of publication of application:
**20.07.88 Bulletin 88/29**

(84) Designated Contracting States:
**AT BE CH DE ES FR GB IT LI LU NL SE**

(71) Applicant: **Eka Nobel Aktiebolag**
**S-445 01 Surte (SE)**

(72) Inventor: **Lovetro, David C.**
**1675 Pinefield Way**
**Marietta Georgia 30066 (US)**

**Alexander, Gary**
**2618 Tritt Springs Trace**
**Marietta Georgia 30062 (US)**

(74) Representative: **Schöld, Zaid**
**Nobel Industries Sweden AB Patent Department Box 11554**
**S-100 61 Stockholm (SE)**

(54) **Improved apparatus for the production of chlorine dioxide.**

(57) In accordance with the practice of this invention there is provided an improved apparatus for the preparation of chlorine dioxide which employs an improved chlorine dioxide generator comprising a small reaction chamber with means for injecting a concentrated metallic chlorate solution, a concentrated sulfuric acid solution, and gaseous sulfur dioxide. The sulfur dioxide gas is injected into the reaction chamber from the bottom through a porous medium which disperses the gas as extremely fine bubbles into the aqueous reaction medium in the chamber.

The reaction chamber is equipped with an internal Teflon braided cooling coil inserted therein which not only cools the reaction medium but also provides a tortuous path for the sulfur dioxide bubbles. By retarding the upward path of the bubbles, the sulfur dioxide is held in solution for a longer period of time allowing more time for reactant gas dissolution and corresponding chemical reaction.

The reaction chamber is maintained under superatmospheric pressure so that the chlorine dioxide that is produced is maintained in solution. Keeping the reaction chamber under pressure, as opposed to atmospheric pressure operation, also promotes sulfur dioxide solubility. Because the chlorine dioxide isn't handled in a separate gas phase, operation of the unit is more simple and inherently safer than prior art systems which handle chlorine dioxide as a gas.

FIG 2

## Description

## "IMPROVED APPARATUS FOR THE PRODUCTION OF CHLORINE DIOXIDE"

### Technical Field

The present invention relates to an improved system or apparatus for the production of chlorine dioxide and more particularly to a improved chlorine dioxide generator that is small and is suitable for water treatment, waste water treatment, cooling tower water treatment, and for food processing applications.

### Background of the Invention

Chlorine dioxide is utilized in a variety of processes, including a large number of microbiocidal applications, and especially in the field of water treatment and odor abatement. Because the compound is especially useful in these applications, the usage of chlorine dioxide is continuing to grow.

There are, however, several drawbacks to the use of chlorine dioxide. The compound, is gaseous form, is very unstable. Because of this inherent danger, the compound is usually produced "on site" rather than produced at a plant and then shipped for usage when and where the compound is needed.

The prior art discloses a variety of different types of on-site chlorine dioxide generators, most of which comprise elongated glass or plastic columns of various constructions. Usually, the column contains an aqueous solution of chlorine dioxide generating reactants. The reactants are introduced into the reaction chamber where they are allowed to react to produce chlorine dioxide. The chlorine dioxide is usually removed as a gas.

Usually, chlorine dioxide is formed in a reaction zone from chlorine dioxide-generating reactants in an aqueous acid reaction medium, and is removed from the reaction zone as a gaseous product stream. The partial pressure of chlorine dioxide in the gaseous product stream is maintained sufficiently low to prevent decomposition of the chlorine dioxide. The chlorine dioxide gas is then dissolved in water for later use or is dissolved directly in the water to be treated. In addition to producing a gaseous reaction product which is not stable and must be processed to an aqueous solution form, previous efforts at producing chlorine dioxide in a small compact unit with high yield, short residence time and high production rates have been based on sodium chlorite chemistry which is expensive when compared to chlorate chemistry.

There are many differenct reactants that can be used to produce chlorine dioxide. However, most of these reactants produce chlorine as a byproduct of the reaction. The presence of chlorine in the chlorine dioxide product is undesirable for water treatment applications. Chlorine readily combines with a wide variety of organic materials producing chlorinated organic compounds, some of which are potentially dangerous carcinogens. The reactants that are most suitable for producing chlorine dioxide for use as a water treatment agent are sulfuric acid, sodium chlorate and sulfur dioxide. Little or no chlorine is produced as a side product of this reaction, limiting the production of the undesirable chlorinated organic species.

The prior art chlorine dioxide generators which employ vessels as reaction chambers tend to be large and bulky. A large reaction chamber is required to provide sufficient reaction volume, to permit efficient gas disengaging, and sometimes to allow solid by-products to crystallize. Another problem associated with such prior art chlorine dioxide generators is the inadequacy of the mixing of the reactants to achieve an efficient reaction.

An example of a prior art chlorine dioxide generating apparatus is U.S. Patent 4,534,952 which discloses a chlorine dioxide generating process which attempted to solve several of these problems by carrying out the chlorine dioxide generating reaction under pressure so that the gaseous products of the reaction remain dissolved in the aqueous reaction phase. Although the chlorine dioxide generator described in the '952 patent is useful for many chlorine dioxide reaction mixtures, the process does not work efficiently for a sodium chlorate/sulfuric acid/sulfur dioxide generating system because the gaseous sulfur dioxide does not remain in contact with the dissolved reactants long enough for efficient generation of chlorine dioxide generation.

U.S. Patent 4,451,444 describes a method and apparatus for producing chlorine dioxide that uses the reactants sodium chlorate, sulfuric acid and sulfur dioxide. However, the above method requires a large processing apparatus and produces chlorine dioxide in the gaseous phase.

What is needed is a small, improved chlorine dioxide generation system that uses the chlorate/ sulfur dioxide/sulfuric acid reactant mixture wherein the chlorine dioxide produced remains in aqueous solution.

### Summary of the Invention

The present invention comprises an improved apparatus for producing a product from a liquid and a gaseous reactant comprising an enclosed reaction chamber for housing a liquid reaction medium. The reaction chamber has a means for introducing a liquid reactant and a means for introducing a gaseous reactant. There is also an outlet means for removing the product which can be either a gas or a liquid. There is a means for defining a tortuous path for the gaseous reactant in the reaction vessel whereby the residence time of the gaseous product in the reaction chamber is increased.

The preferred embodiment of the present invention is an improved chlorine dioxide generating process comprising a chlorine dioxide generating apparatus with an unusually small reaction chamber. The preferred reactants for producing the chlorine dioxide are sulfuric acid, sodium chlorate and sulfur dioxide gas. The chemical reaction which takes place between the sulfur dioxide and the chlorate in this process may summarily be represented by the following reaction in which Me symbolizes a metal atom:

$$2MeClO_3 + SO_2 + H_2SO_4 \rightarrow 2ClO_2 + 2MeHSO_4$$

The sulfur dioxide reduces the chlorate ion with the resulting formation of chlorine dioxide and a metal sulfate. Chlorine dioxide produced from these reactants has very little chlorine produced as a by-product, thereby reducing the probability of forming undesirable chlorinated organic by-products. If production of chlorine as a by-product is not a problem, then an acid other than sulfuric acid, such as hydrochloric acid, can be used in the reaction.

The improved chlorine dioxide generating system of the present invention comprises a gas distribution medium mounted in the bottom of a reaction chamber for injecting gaseous sulfur dioxide into the chamber. The gas distributor uses porous fluorocarbon plate inserted therein through which the sulfur dioxide is forced. The porous fluorocarbon medium breaks the sulfur dioxide gas into extremely fine bubbles, thereby enhancing the solubility of the sulfur dioxide in the aqueous reaction medium.

In the prior art chlorine dioxide generating systems producing a gaseous phase product stream, dilution air was added to the sulfur dioxide feed to form a dilute sulfur dioxide-in-air mixture to limit the partial pressure of the chlorine dioxide product in the gas phase. The improved chlorine dioxide generating system of the present invention uses pure sulfur dioxide gas without the addition of dilution air to eliminate the bulk of the gas phase in the reaction chamber and to assist in keeping the gaseous product dissolved in the aqueous solution. Since sulfur dioxide absorption in the liquid phase is deemed crucial to an efficient liquid phase reaction, the use of pure sulfur dioxide vapor instead of dilute sulfur dioxide in air will further enhance the solubility of the sulfur dioxide in the aqueous reaction medium.

Chlorate solution and sulfuric acid are introduced into the reaction chamber through liquid inlets located on the sides of the reaction chamber. The present invention also comprises a cooling water tube bundle inside the reaction chamber that, not only cools the reaction medium, but also provides a tortuous path for the gaseous sulfur dioxide to travel as it rises through the reaction solution thereby retarding the sulfur dioxide bubbles and allowing increased contact with the dissolved reactants.

The chemical reaction inside the chamber will be carried out under superatmospheric pressure so that the chlorine dioxide produced by the reaction will remain dissolved in the aqueous effluent reducing the possibility of explosive decomposition. The preferred method of providing the superatmospheric pressure is by pumping water from the untreated water supply to the vicinity of the generator through a back pressure control device to maintain a suitable back pressure on the water stream. The product outlet connection at the top of the reaction chamber is directly connected to this pressurized water line, causing a similar back pressure to be developed in both the water piping and the reaction chamber. The reactor effluent with the chlorine dioxide dissolved therein is immediately mixed with this pressurized water stream to further promote chlorine dioxide solubility. The pressurized stream of water with the chlorine dioxide dissolved therein is then injected into the main stream of water to be treated.

Accordingly, it is an object of the present invention to provide a small, improved chlorine dioxide generator.

Another object of the present invention is to provide an improved method of producing chlorine dioxide.

Another object of the present invention is to provide an improved chlorine dioxide generator that can be used on-site.

Another object of the present invention is to provide an improved chlorine dioxide generator that does not produce chlorine dioxide in the gaseous phase and is therefore safe to use.

Yet a further object of the present invention is to provide an improved chlorine dioxide generator that utilizes pressurized water to produce the necessary reaction chamber back pressure.

Another object of the present invention is to provide an improved chlorine dioxide generator which utilizes sulfuric acid, sulfur dioxide, and sodium chlorate as reactants.

Another object of the present invention is to provide an improved chlorine dioxide generator in which pure sulfur dioxide gas is dispersed into the reaction chamber as very fine bubbles to enhance sulfur dioxide solubility.

Another object of the present invention is to provide an improved chlorine dioxide generator in which the sulfur dioxide is introduced as nearly pure sulfur dioxide vapor to further enhance the solubility of the sulfur dioxide in the aqueous medium.

Another object of the present invention is to provide an improved chlorine dioxide generator that has a small reaction chamber with a cooling water tube bundle which both cools the reaction medium and also retards the upward movement of sulfur dioxide bubbles.

These and other objects, features and advantages of the present invention will become apparent after a review of the followed detailed description of the disclosed embodiment and the appended claims.

## Brief Description of the Drawings

Fig. 1 is a schematic representation of the improved chlorine dioxide generator of the present invention.

Fig. 2 is a cross-sectional view of the reaction chamber shown in Fig.1.

## Description of the Preferred Embodiment

In accordance with the practice of this invention there is provided an improved apparatus for the preparation of chlorine dioxide which employs an improved chlorine dioxide generator comprising a small reaction chamber with means for injecting a concentrated metallic chlorate solution, a concentrated sulfuric acid solution, and gaseous sulfur dioxide. The metallic chlorate used in the present invention includes, but is not limited to, lithium chlorate, sodium chlorate, potassium chlorate, rubidium chlorate, and cesium chlorate. The sulfur dioxide gas is injected into the reaction chamber from the bottom through a porous medium which disperses the gas as extremely fine bubbles of approximately 30 to 100 μm in diameter into the aqueous reaction medium in the chamber.

In the preferred embodiment of the present invention, the reaction chamber is equipped with an internal teflon braided cooling coil inserted therein which not only cools the reaction medium but also provides a tortuous path for the sulfur dioxide bubbles. By retarding the upward path of the bubbles, the sulfur dioxide is held in solution for a longer period of time allowing more time for reactant gas dissolution and corresponding chemical reaction.

The reaction chamber is maintained under superatmospheric pressure so that the chlorine dioxide that is produced is maintained in solution. Keeping the reaction chamber under pressure, as opposed to atmospheric pressure operation, also promotes sulfur dioxide solubility. Because the chlorine dioxide isn't handled in a separate gas phase, operation of the unit is more simple and inherently safer than prior art systems which handle chlorine dioxide as a gas.

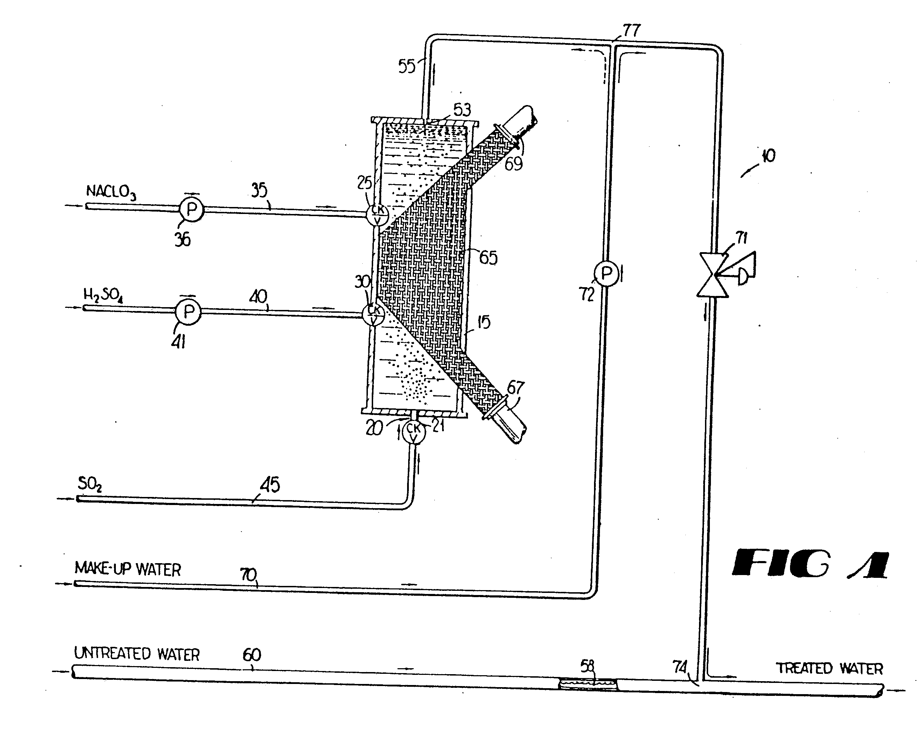

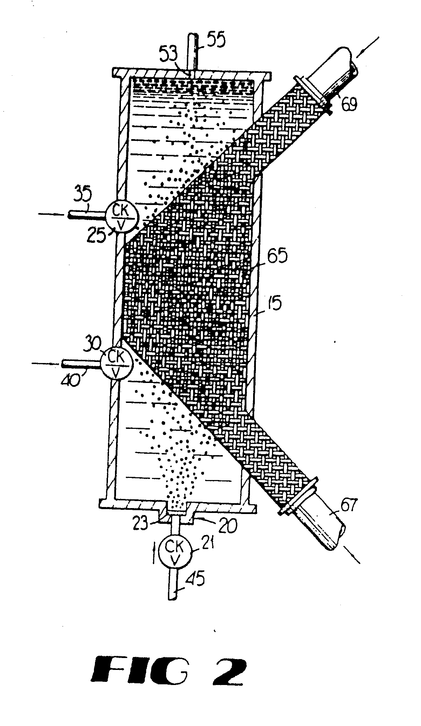

The improved chlorine dioxide generator of the present invention is best understood by reference to the accompanying drawings. In the preferred embodiment illustrated in Fig. 1, wherein 10 designates the improved chlorine dioxide generator in general, the chlorine dioxide generator comprises a columnar cylindrical reaction chamber 15 containing a braided teflon cooling coil 65. The coil 65 is loosely packed into the reaction chamber to fill the cross-section thereof. Suflur dioxide gas, vaporized in a conventional manner, is fed along a pipe 45 to a check valve 21 and into the reaction chamber 15 at inlet 20 through a porous plastic media 23 at the bottom of the reaction chamber 15. The porous plastic media 23 is inserted in the path of the sulfur dioxide gas at inlet 20 (See Fig. 2). The porous plastic media in the preferred embodiment is a .25 inch thick PVDF (Kynar) sheet with a 25 μm average pore size (Porex Technologies, Fairburn, Georgia). It is to be understood that liquid sulfur dioxide can be introduced into the reaction chamber 15. The pressure in the chamber can be adjusted so that the liquid sulfur dioxide remains in the liquid phase or enters the gaseous phase after introduction into chamber 15.

The reaction chamber 15 also has liquid inlets 25 and 30 fitted with check valves and located on the sides of the reaction chamber 15. Aqueous solutions of sodium chlorate and sulfuric acid are pumped to the reaction chamber 15 via pipes 35 and 40 by suitable metering pumps 36 and 41 with pulsation dampeners (not shown) and terminating in the inlets 25 and 30, respectively. It is to be understood that it is not critical where inlets 25 and 30 are located on the reaction chamber 15. However, in the preferred embodiment, the inlet through which the acid is introduced should be located near the bottom of the reaction chamber, below the chlorate solution inlet and the inlet through which the metallic chlorate solution is introduced should be located a sufficient distance above the acid inlet so that the acid is substantially fully diluted with the reaction medium before contacting the chlorate solution. Thus, the acid solution is immediately placed in contact with the sulfur dioxide gas as the gas is introduced into the chamber. The acid-sulfur dioxide solution then comes into contact with the metallic chlorate solution. Although in the preferred embodiment sulfuric acid is used as the acid component in the reaction, it is to be understood that other acids, such as hydrochloric acid, can be used in practicing the present invention.

The concentration of sodium chlorate in the aqueous feed solution may vary from about 1.9 to about 6.1 molar, typically about 3.3 molar. The concentration of sulfuric acid in the aqueous feed solution may vary from about 10.5 to about 17.3 molar, typically about 14 molar. Usually the molar proportions of sodium chlorate to sulfuric acid is about 0.4 : 1 to about 0.6:1. The temperature at which the reaction proceeds in the reaction chamber 15 is between approximately 80°F and 130°F with the preferred temperature of between about 90°F and 115°F and the especially preferred temperature of about 100°F.

At the top of reaction chamber 15 is an outlet 53 for removing the solution of chlorine dioxide via pipe 55. The chlorine dioxide solution is transported to pipe 60 which carries untreated water. The chlorine dioxide solution is then injected into the untreated water stream at 74.

Referring now to Fig. 2, reaction chamber 15 contains a braided cooling coil 65 which, in the preferred embodiment, is comprised of braided tubing made from teflon fluorocarbon resins. In the preferred embodiment of the present invention, the reaction chamber 15 is fitted with a Teflon® Model 650 braided heat exchanger 65 (Ametek Inc., Wilmington, DE) which provides a tortuous path for the sulfur dioxide gas bubbles which are injected into the bottom of the reaction chamber. The heat exchanger 65 comprises a plurality of small-diameter braided teflon tubes connected at each end to fittings 67 and 69. A cooling liquid can be circulated through the tubes via fittings 67 and 69. The preferred cooling liquid is water. The teflon braided heat exchanger retards the upward path of the bubbles thereby causing the sulfur dioxide bubbles to be in contact with the sodium chlorate and sulfuric acid in solution for a longer period of time and promotes solubility of the sulfur dioxide gas in the aqueous reaction medium. This allows a more complete reaction to form chlorine dioxide in the smaller volume of aqueous reactant medium. It is to be understood that any single or separate means that provides both a tortuous path for the sulfur dioxide bubbles and adequate heat removal could be used in the reaction chamber in accordance with the present invention.

Referring again to Fig. 1, the reaction medium, comprising the solution of sulfuric acid, sodium chlorate and sulfur dioxide gas, fills the reaction chamber 15, and is subjected to elevated pressure therein to substantially prevent the formation of a continuous phase of gaseous chlorine dioxide and substantially retain the chlorine dioxide gas in the reaction chamber effluent. Usually, the pressure is maintained between about 50 to about 150 psig, preferably between about 80 to about 100 psig, in the reaction chamber. In the preferred embodiment of the present invention, pressure in the reaction chamber 15 is maintained by piping untreated water through pipe 70 by pump 72 into pipe 55 at inlet 77. Pumping untreated water in this manner provides a back pressure into reaction chamber 15. Pressure in the reaction chamber 15 is regulated by a back pressure control device 71. It is to be understood that the pressure in reaction chamber 15 must be great enough to keep substantially all of the chlorine dioxide produced in chamber 15 in solution. The pressurized solution of chlorine dioxide in the spent reaction medium in reaction chamber 15 is discharged from the reaction chamber 15 through pipe 55 to water 58 flowing in pipe 60 after a residence time at least sufficient to effect substantially complete reaction of the sulfur dioxide in the reaction chamber. Residence time is controlled by the rate of introduction of the sodium chlorate/sulfuric acid solutions.

The discharge of the diluted reactor effluent into the untreated water 58 flowing in pipe 60 achieves substantial dilution of the chlorine dioxide, so that the gas remains dissolved and effects the desired treatment of the water 58 in the pipe 60.

In operation, an aqueous solution of sodium chlorate and sulfuric acid enters the reaction chamber 15 through inlet valves 25 and 30 respectively. Sulfur dioxide gas enters the reaction chamber 15 through check valve 21 just before the inlet 20 located at the bottom of reaction chamber 15. Inlet 20 contains a porous plastic media 23 which disperses the gas into the reaction solution as small bubbles (See Fig. 2). The braided teflon cooling coil 65, which is installed in the reaction chamber 15, retards the upward movement of the sulfur dioxide bubbles allowing prolonged contact of the sulfur dioxide bubbles with the dissolved sulfuric acid and sodium chlorate in the reaction medium. By pumping untreated water through pipe 70 into pipe 55, the internal pressure of the reaction chamber 15 is superatmospheric preventing the formation of a continuous gaseous phase of chlorine dioxide and maintaining the potentially gaseous product of the reaction in a substantially dissolved state. The resulting aqueous solution of chlorine dioxide in spent reaction medium is discharged through the outlet bore 53 to the flowing water stream in pipe 55 which is finally injected into the untreated water stream flowing in pipe 60 to effect the desired water treatment. The improved chlorine dioxide generator of the present invention 10 is simple in construction, easy to operate and requires little maintenance. Chlorine dioxide can be produced rapidly at high yield and efficiency as an aqueous solution in the spent reaction medium. No gaseous products are produced and the equipment required for handling gaseous reaction products is thereby eliminated.

## Example

A small scale chlorine dioxide generation system is operated continuously, with a sodium chlorate feed consisting of 3.22 gallons per hour of 600 gram per liter $NaClO_3$ solution, a sulfuric acid feed consisting of 2.10 gallons per hour of 93 wt.% $H_2SO_4$ solution, and a sulfur dioxide feed consisting of 0.112 ACFM (6.42 pounds per hour) of anhydrous sulfur dioxide gas. The reaction chamber is maintained at a pressure of about 90 PSIG, and a temperature of 100°F. The reactor effluent is removed from the reaction chamber at a rate of 7.11 gallons per hour of an aqueous solution containing 8.33 pounds per hour of dissolved chlorine dioxide along with some unreacted sodium chlorate and sulfuric acid, and additional dissolved by-products of the reaction. The reactor effluent stream is mixed with a slipstream of 2.5 gallons per minute of untreated water from a water treatment facility. This combined stream is then injected into 6664 gallons per minute of untreated water, resulting in a 2.5 ppm $ClO_2$ concentration in the main untreated water stream. At the proposed continuous rate, up to 200 pounds of chlorine dioxide are produced per 24 hour day to effect the desired treatment of up to 9.6 million gallons per 24 hour day of untreated water.

It should be understood, of course, that the foregoing relates only to a preferred embodiment of the present invention and that numerous modifications or alterations may be made therein without departing from the spirit and the scope of the invention as set forth in the appended claims.

## Claims

1. An improved apparatus for continuously producing chlorine dioxide comprising:

(a) means defining an enclosed reaction chamber for housing an aqueous reaction medium capable of continuously producing chlorine dioxide in solution;

(b) first means associated with said reaction chamber for introducing a solution of acid and a solution of metallic chlorate into said reaction chamber;

(c) second means associated with said reaction chamber for introducing sulfur dioxide gas into said reaction chamber as fine bubbles, said second means comprising a gas distributor containing a porous medium through which said gas is dispersed;

(d) outlet means associated with said reaction chamber for removing a solution of chlorine dioxide from said reaction chamber, and

(e) third means associated with said reaction chamber for defining a tortuous path for said sulfur dioxide in said reaction chamber, said third means comprising a heat exchanger capable of circulating a heat exchange fluid therethrough, whereby the residence time of said gaseous reactant in said reaction chamber is increased; and

(f) fourth means associated with said reaction chamber for pressurizing said reaction chamber.

2. The apparatus of claim 1, wherein said first means comprises means for introducing sulfuric acid and sodium chlorate.

3. The apparatus of claim 1 wherein said internal heat exchanger comprises a bundled of tubes.

4. The apparatus of claim 1 or 3 wherein said internal heat exchanger comprises a bundle of braided tubes having a high surface area, and filling the cross-section of said chamber.

5. The apparatus of claim 1 or 2 wherein said second means for introducing sulfur dioxide is located at the bottom of said reaction chamber.

6. The apparatus of claim 1 wherein said first means for introducing acid is spaced above said second means for introducing sulfur dioxide and said second means for introducing metallic chlorate is spaced sufficiently above said first means for introducing acid so that said acid is substantially diluted before contacting said metallic chlorate solution.

7. The apparatus of claim 1 wherein said means for pressurizing the chamber comprises pumping untreated water through a back pressure control means to pressurize said reaction chamber.

8. The apparatus of claim 1 further comprising:

(a) a pipe containing waste water flowing therethrough;

(b) an outlet line for conducting a reaction product from said outlet means to a treatment inlet defined in said pipe; and

(c) means for connecting a source of pressurized fluid to said outlet line between said outlet means and said treatment inlet so as to pressurize said reaction chamber.

9. The apparatus of claim 7, wherein said source of pressurized fluid comprises a fluid line connecting said pipe to said outlet line and means for pumping water from said pipe through said fluid line to said outlet line.

10. The apparatus of claim 7, further comprising a back pressure control valve in said outlet line between the location at which said fluid line is connected with said outlet line and said treatment inlet.

NACLO₃

35

25

53

55

69

P
36

65

H₂SO₄

40

30

15

P
41

67

20  21

SO₂

45

MAKE-UP WATER

70

77

71

P
72

74

UNTREATED WATER

60

58

TREATED WATER

10

FIG A

0275246

0275246

FIG 2